# EUROPÄISCHE PATENTANMELDUNG

(11) **EP 1 049 338 A2**
(43) Veröffentlichungstag der Anmeldung: **02.11.2000**
(21) Anmeldenummer: 00250131.0
(22) Anmeldetag: 26.04.2000
(51) Int. Cl.: H04Q 3/00

(54) **Verfahren zum Erstellen von Dienstprogrammen**

(30) Priorität: 29.04.1999 DE 19920640
(71) Anmelder: SIEMENS AKTIENGESELLSCHAFT, 80333 München (DE)
(72) Erfinder: Fromm, Gerhard, 12249 Berlin (DE); Hartwig, Martin, 10117 Berlin (DE); Montzka, Claudia, 12203 Berlin (DE); Krause, Klaus, 14055 Berlin (DE)

(57) **Zusammenfassung**

Bei dem Verfahren werden Programm-Bausteine (SIB) in einer Baustein-Bibliothek (BBI') abgelegt, wobei den Programm-Bausteinen jeweils Schnittstellenbeschreibungen (SBI-T) zugeordnet sind. Aus dienstindividuell ausgewählten Programm-Bausteinen wird ein Dienstprogramm (DP) aufgebaut. Mehrere Programm-Bausteine des Dienstprogrammes, die einen Teildienst realisieren, werden durch Generierung einer formalen Schnittstellenbeschreibung zu einem Teildienstprogramm (HLSIB) zusammengefaßt, auf das auch andere Dienstprogramme (DP2) zugreifen können.

## Beschreibung

Die Erfindung liegt auf dem Gebiet der Entwicklung von Dienstprogrammen, die durch die Verknüpfung von Programm-Bausteinen erzeugt werden. Derartige Dienstprogramme finden insbesondere zunehmend Verbreitung auf dem Gebiet der Telekommunikation in sogenannten intelligenten Netzen (IN). Unter Dienstprogrammen sind im Rahmen der vorliegenden Erfindung allgemein Programme (z. B. für die Telekommunikation) zu verstehen, die bei Aufruf (z. B. einer bestimmten Telefonnummer) eine Leistung oder einen Dienst (z. B. eine Auskunft) bereitstellen. Dienstprogramme können sowohl Standarddienste oder nach Kundenwünschen spezifisch Dienste realisieren.

Die grundsätzliche Struktur derartiger Dienstprogramme ist durch einen modularen Aufbau gekennzeichnet. Basis des modularen Aufbaus sind die genannten Programm-Bausteine, die auch als SIBs (Service Independent Buildingblocks) bezeichnet werden und in der Druckschrift ITU-T Recommendation Q.1223: "Global functional plane for intelligent network Capability Set 2" vom September 1997 insbesondere auf Seite 8 im Kap. 4.3.2 "Service independent building blocks" beschrieben sind. Dies sind Softwaremodule, die üblicherweise in einer konventionellen Programmiersprache (beispielsweise C oder C++) programmiert sind. Die Dienstprogramme werden durch Verknüpfung der Programm-Bausteine (SIBs) erstellt, indem diese gemäß den gewünschten Diensten z. B. nach kundenspezifischen Anforderungen verknüpft werden. Die durch diese Verknüpfung entstehenden Dienstprogramme werden auch FSL (Flexible Service Logic) genannt. Die dabei verwendeten Programm-Bausteine werden dabei zur Verknüpfung entsprechend parametrisiert. Die Entwicklung der Dienstprogramme bzw. die Verknüpfung der Programm-Bausteine muß nicht unbedingt in derselben Programmiersprache umgesetzt werden, in der die Programm-Bausteine programmiert sind.

In der Praxis treten Situationen auf, in denen ein aus individuellen Programm-Bausteinen zusammengestelltes Dienstprogramm zumindest teilweise auch für andere Anwendungen oder innerhalb anderer Dienstprogramme verwendbar wäre. Im Hinblick auf eine effektive Entwicklung von Dienstprogrammen besteht damit das Bedürfnis, Teile bereits erstellter Dienstprogramme auch in weiteren, ggf. noch zu erstellenden Dienstprogrammen mit einfachen Mitteln nutzbar zu machen.

Dazu ist es grundsätzlich denkbar, Teile bereits erstellter Dienstprogramme durch Kopieren und manuelles Anpassen der Parameter in jeweils weitere Dienstprogramme zu übernehmen. Dies gestaltet sich jedoch vergleichsweise aufwendig, weil alle übernommenen Funktionen erneut getestet werden müssen. Hinsichtlich der Wartung und der Dienstprogrammpflege stellt sich zusätzlich das Problem, daß im Falle von Erweiterungen oder Korrekturen des ursprünglichen Dienstprogrammes die insoweit betroffenen Teile in den weiteren Dienstprogrammen manuell angepaßt bzw. überarbeitet werden müßten.

Um unter Vermeidung der vorgenannten Probleme Teile bereits erstellter Dienstprogramme in weiteren Dienstprogrammen einfach nutzen zu können, wird erfindungsgemäß ein Verfahren vorgeschlagen, bei dem:
- Programm-Bausteine in einer Baustein-Bibliothek abgelegt werden, wobei den Programm-Bausteinen jeweils Schnittstellenbeschreibungen zugeordnet sind,
- das Dienstprogramm aus dienstindividuell ausgewählten Programm-Bausteinen aufgebaut wird, indem die Schnittstellen der Programm-Bausteine mit aktuellen Parametern zur Verknüpfung mit anderen Programm-Bausteinen des Dienstprogramms versehen werden,
- aus mehreren Programm-Bausteine eines Dienstprogramms, die einen Teildienst realisieren, ein Teildienstprogramm mit gleicher Teildienst-Funktionalität generiert wird, für das eine formale Schnittstellenbeschreibung generiert und diese den am Teildienstprogramm beteiligten Programm-Bausteinen zugeordnet wird, und
- das Teildienstprogramm zur Implementierung anderer Dienstprogramme bereitgestellt wird.

Das erfindungsgemäße Verfahren erlaubt vorteilhafterweise, einmal innerhalb eines Dienstprogrammes entwickelte und durch Verknüpfung von Programm-Bausteinen realisierte Leistungen oder Dienste mit geringem Aufwand in auch anderweitig verwendbare Bausteine (in Form von Teildienstprogrammen) zu überführen. Die Teildienstprogramme haben vorteilhafterweise alle Eigenschaften der konventionellen Programm-Bausteine, sind aber durch höherwertige Funktionalitäten gekennzeichnet. Derartige Teildienstprogramme werden auch als HLSIB ("High Level SIB") bezeichnet, vergleiche die oben erwähnte ITU-T Recommendation, insb. Kap. 4.5.4 "Characteristics of an HLSIB" auf S. 15.

Ein weiterer Vorteil des erfindungsgemäßen Verfahrens besteht darin, daß die Teildienstprogramme zum Nutzen aller auf sie zurückgreifenden Dienstprogramme zentral verwaltet, weiterentwickelt, gepflegt und korrigiert werden können.

Eine hinsichtlich der Programmverwaltung bevorzugte Ausgestaltung des erfindungsgemäßen Verfahrens sieht vor, daß das Teildienstprogramm in derselben Baustein-Bibliothek wie die Programm-Bausteine abgelegt wird.

Ein Ausführungsbeispiel der Erfindung wird nachfolgend anhand einer Zeichnung weiter erläutert; es zeigen:
Figur 1 schematisch den Aufbau eines Programm-Bausteins,
Figur 2 die Verknüpfung mehrerer Programm-Bausteine zu einem Dienstprogramm,
Figur 3 ein komplexes Dienstprogramm und die Definition eines Teildienstprogrammes und
Figur 4 die Einbindung des Teildienstprogrammes in verschiedene Dienstprogramme.

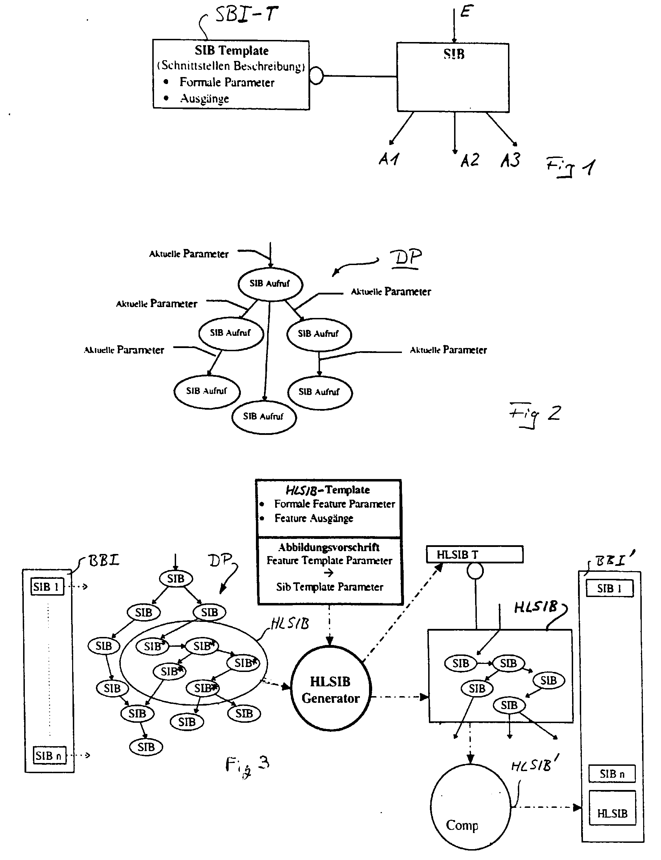

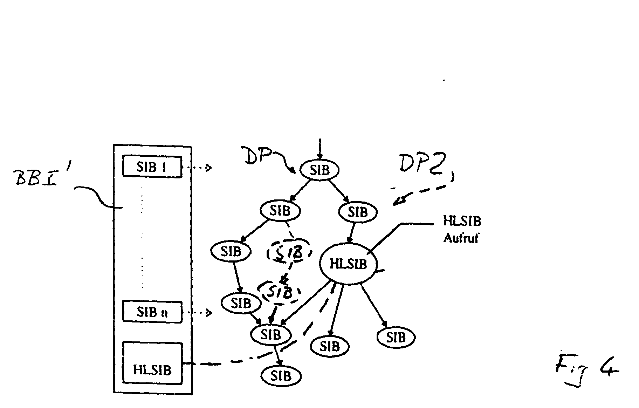

Figur 1 zeigt einen Programmbaustein SIB, der als in einer konventionellen Programmiersprache (beispielsweise C++) programmiertes Softwaremodul realisiert sein kann. Derartige Programm-Bausteine werden auch als "Service Independent Buildingblocks" bezeichnet. Dem Programm-Baustein ist eine Schnittstellenbeschreibung SIB-T zugeordnet, die auch als "SIB Template" bezeichnet wird. Darin sind die formalen Parameter mit Namen und Typen niedergelegt, die z. B. den Eingang und eingangsseitig zu übergebende Größen definieren sowie die verschiedenen Ausgänge (beispielsweise ergebnisabhängige Verzweigungen), über die der Programm-Baustein SIB im Rahmen des ablaufenden Programmes verlassen werden kann. Im Ausführungsbeispiel nach Figur 1 weist der Programm-Baustein einen durch formale Parameter definierten Eingang E und drei ergebnisabhängige Ausgänge A1, A2 und A3 auf.

Wie Figur 2 zeigt, werden in einem intelligenten Telekommunikationsnetz mehrere Programm-Bausteine SIB gemäß Figur 1 verknüpft, indem über die jeweilige Schnittstellenbeschreibung SIB-T die Programm-Bausteine SIB mit aktuellen Parametern versehen werden. Die sich daraus ergebende Verknüpfung realisiert die jeweils gewünschte Leistung in Form eines Dienstprogrammes DP. Die Verknüpfung der Programm-Bausteine wird als FSL ("Flexible Service Logic") bezeichnet. Beim Ablauf des Dienstprogrammes DP werden die einzelnen Programm-Bausteine SIB unter jeweiliger Übergabe der aktuellen Parameter beispielsweise aus einer Baustein-Bibliothek aufgerufen. Dieser Aufruf wird ausgelöst z. B. durch Aktivierung eines Dienstes. Diese Dienstaktivierung kann beispielsweise durch Anruf einer bestimmten Telefonnummer erfolgen.

Im Zusammenhang mit der Übersicht in Figur 3 wird nun das erfindungsgemäße Verfahren im einzelnen erläutert. In einer Baustein-Bibliothek BBI sind eine Vielzahl einzelner Programm-Bausteine SIB1 bis SIBn abgelegt. Jedem Programm-Baustein ist, wie im Zusammenhang mit Figur 1 erläutert, eine Schnittstellenbeschreibung zugeordnet. Eine Vielzahl von Programm-Bausteinen SIB werden wie im Zusammenhang mit Figur 2 erläutert zu einem Dienstprogramm DP verknüpft. Innerhalb des Dienstprogrammes DP ist ein (oder ggf. auch mehrere) Teildienstprogramm HLSIB realisiert. Dieses Teildienstprogramm realisiert einen Teildienst (Feature), der auch außerhalb des bestehenden Dienstprogrammes DP nutzbar wäre. Nach dem erfindungsgemäßen Verfahren werden die (im Ausführungsbeispiel 5) Programm-Bausteine SIB*, die das Teildienstprogramm realisieren, zusammengefaßt, indem eine formale Schnittstellenbeschreibung HLSIB-T für das Teildienstprogramm generiert wird. Dazu erstellt ein HLSIB-Generator in analoger Struktur wie zu den einfachen Programm-Bausteinen SIB eine Schnittstellenbeschreibung HLSIB-T (HLSIB-Template), die formale (Teildienst-)Parameter und die Ausgänge des Teildienstprogrammes definiert. Ferner wird eine Abbildungsvorschrift erstellt, die diese Schnittstellenbeschreibung auf die Schnittstellen der verwendeten Programm-Bausteine SIB* abbildet. Damit sind sowohl die Eingänge bzw. die Ausgänge des Teildienstprogrammes als auch - in entsprechender Konfiguration und Parametrisierung - die Programm-Bausteine SIB* definiert, die das Teildienstprogramm HLSIB bilden. Die Abbildungsvorschrift und die Schnittstellenbeschreibung können individuell beeinflußt werden. Das im rechten Teil der Figur 3 schematisch in analoger Darstellung zu den Programm-Bausteinen gemäß Figur 1 dargestellte Teildienstprogramm HLSIB wird so generiert, daß es in konventioneller Programmiersprache vorliegt. Bedarfsweise kann das so gebildete Teildienstprogramm mit Hilfe eines konventionellen Compilers COMP umgesetzt und optimiert werden. Da durch den höheren Funktionalitätsgrad programmbaustein-übergreifende Optimierungsmethoden angewendet werden können, können bei der Kompilierung höher optimierte Teildienstprogramme generiert werden, die sich beispielsweise durch geringere Laufzeiten und optimierten Ressourcenverbrauch (Speicherplatz-Verbrauch und Zugriffszeiten) auszeichnen. Das Teildienstprogramm HLSIB oder ggf. das kompilierte Teildienstprogramm HLSIB' wird in der Baustein-Bibliothek BBI' wiederverwendbar abgelegt. In dem Teildienstprogramm werden die verwendeten Programm-Bausteine z. B. durch Unterprogrammaufrufe in der Zielsprache zur Ausführung angesprungen und damit der Ablauf des Teildienstprogrammes initiiert.

Wie Figur 4 verdeutlicht, ist das einmal in der Baustein-Bibliothek BBI' abgelegte Teildienstprogramm HLSIB auch anderen Dienstprogrammen zugänglich. So kann ein zweites Dienstprogramm DP2 (gegenüber dem ersten Dienstprogramm DP unterschiedliche Programm-Bausteine dieses Dienstprogramms sind gestrichelt dargestellt) und/oder auch das in Figur 3 gezeigte Dienstprogramm DP bedarfsweise auf das abgelegte Teildienstprogramm HLSIB durch Aufruf aus der Bibliothek zugreifen.

Mit dem erfindungsgemäßen Verfahren werden basierend auf einer Systemarchitektur mittels SIB und FSL realisierte (Leistungs-)Teile (Features) bereits bestehender Dienstprogramme auch für andere Dienste verfügbar gemacht, ohne daß es einer Neuprogrammierung oder manuellen Anpassung der Teildienste bedarf. Mit dem erfindungsgemäßen Verfahren können einmal erstellte Teildienstprogramme automatisch in wiederverwendbare Bausteine überführt werden, die die an sich bekannten und mit Programmierwerkzeugen einfach zu handhabenden Eigenschaften konventioneller Programm-Bausteine haben, aber eine höherwertige Funktionalität bieten. Die Teildienstprogramme können vorteilhafterweise zentral verwaltet, weiterentwickelt und bedarfsweise korrigiert werden, wobei von dieser Pflege der Teildienstprogramme alle auf sie zurückgreifenden Dienstprogramme profitieren.

## Patentansprüche

1. Verfahren zum Erstellen von Dienstprogrammen, insbesondere für intelligente Telekommunikationsnetze, bei dem:
― Programm-Bausteine (SIB1...SIBn) in einer Baustein-Bibliothek (BBI) abgelegt werden, wobei den Programm-Bausteinen jeweils Schnittstellenbeschreibungen (SIB-T) zugeordnet sind,
― das Dienstprogramm (DP) aus dienstindividuell ausgewählten Programm-Bausteinen (SIB) aufgebaut wird, indem die Schnittstellenbeschreibungen (SIB-T) der Programm-Bausteine mit aktuellen Parametern (E, A1, A2, A3) zur Verknüpfung mit anderen Programm-Bausteinen des Dienstprogramms (DP) versehen werden,
― aus mehreren Programm-Bausteine (SIB*) eines Dienstprogramms (DP), die einen Teildienst (HLSIB) realisieren, ein Teildienstprogramm (HLSIB) mit gleicher Teildienst-Funktionalität generiert wird, für das eine formale Schnittstellenbeschreibung (HLSIB-T) generiert wird und diese formale Schnittstellenbeschreibung (HLSIB-T) den am Teildienstprogramm (HLSIB) beteiligten Programm-Bausteinen (SIB*) zugeordnet wird, und
― das Teildienstprogramm (HLSIB) zur Implementierung in andere Dienstprogramme (DP2) bereitgestellt wird.

2. Verfahren nach Anspruch 1, bei dem
― das Teildienstprogramm (HLSIB) in derselben Baustein-Bibliothek (BBI) wie die Programm-Bausteine (SIB) abgelegt wird.
